# EUROPÄISCHE PATENTSCHRIFT

(11) **EP 1 326 713 B1**
(45) Veröffentlichungstag und Bekanntmachung des Hinweises auf die Patenterteilung: **24.01.2007**
(21) Anmeldenummer: 01986275.4
(22) Anmeldetag: 26.09.2001
(51) Int. Cl.: B03D 1/14, C02F 1/24, B03D 1/02

(54) **FLOTATIONSVORRICHTUNG**
FLOTATION DEVICE
DISPOSITIF DE FLOTTATION

(30) Priorität: 27.09.2000 DE 10047958
(43) Veröffentlichungstag der Anmeldung: 16.07.2003
(73) Patentinhaber: Meri Entsorgungstechnik für die Papierindustrie GmbH, 81673 München (DE)
(72) Erfinder: MENKE, Lucas, 81673 München (DE); TROUBOUNIS, George, 80331 München (DE)
(74) Vertreter: Rasch, Michael
(86) Internationale Anmeldenummer: PCT/DE2001/003769
(87) Internationale Veröffentlichungsnummer: WO 2002/028538

(56) Entgegenhaltungen:
- EP-A- 0 604 271
- EP-A- 0 933 110
- WO-A-90/13349
- DE-A- 2 147 916
- US-A- 3 182 799
- US-A- 3 879 296

## Beschreibung

Die Erfindung betrifft Flotationsvorrichtung zur Trennung von Stoffen oder Stoffgemischen aus Suspensionen zur Bildung mindestens einer stoffreichen und einer stoffarmen Fraktion, mit mehreren in einem Flotationstank übereinander an geordneten, rotationssymmetrischen Lamellen, wobei die stoffarme Fraktion beim Trennvorgang in Lamellenzwischenräume zwischen den Lamellen eintritt und zu einem Klarfluid-Sammelrohr gelangt und horizontal außerhalb der Lamellen ein vertikal sich erstreckender ringförmiger Trennraum ausgebildet ist, der mit einem oberhalb der Lamellen vorgesehenen Ablauf für die stoffreiche Fraktion kommuniziert.

Aus der US 3,182,799 ist eine Flotationsvorrichtung mit rechteckigem Grundriß bekannt, bei der aufwärts gerichtete Lamellen vorhanden sind, wobei im Zwischenraum zwischen je zwei Lamellen oben ein Suspensionseinlaß und darunter ein Klarfluid-Auslaß vorgesehen sind, wobei zwischen Ein- und Auslaß kurze Ablenkbleche vorhanden sind. Diese Anordnung hat den Nachteil, daß aufgrund der Dimensionierung vor allem der Ablenkbleche bei hoher hydraulischer Belastung (hohe Drücke oder Durchsätze) ein "Kurzschlußstrom" vom Zulauf zum Ablauf entsteht, der drastisch verschlechterte Wirkungsgrade bei der Trennung bewirkt. Ferner die Reinigung der Anlage, wie diese insbesondere in der Papierindustrie bei der Farbumstellung erforderlich ist, sehr aufwendig aufgrund der separaten Zulaufleitungen.

Hiervon ausgehend liegt der Erfindung die Aufgabe zugrunde, eine gattungsgemäße Flotationsvorrichtung zu schaffen, welche die oben genannten Nachteile vermeidet und sich insbesondere durch eine wirksame Trennung der gewünschten Stoffe der Suspension in eine stoffarme und eine stoffreiche Fraktion auszeichnet.

Diese Aufgabe wird durch die im Patentanspruch 1 angegebenen Merkmale gelöst. Vorteilhafte Weiterbildungen ergeben sich aus den Unteransprüchen.

Die wesentlichsten Vorteile der Erfindung bestehen darin, daß gegenüber horizontalen Flotationsvorrichtungen die Installationsfläche reduziert ist und damit die Flotationsleistung pro Installationsfläche größer ist. Durch die Kombination der Lamellenanordnung mit dem exzentrisch beschickten Reaktions- und Mischraum ergibt sich eine verbesserte Flockenbildung und damit bessere Prozeßwerte im Filtrat. Durch die Abscheidung mittels des doppellamelligen Prinzips ergeben sich bessere Abscheidungswerte.

Die Erfindung wird nachfolgend anhand der beigefügten Zeichnungen weiter erläutert. Dabei zeigt:
- Fig. 1:: einen schematischen Axialschnitt durch eine erste Ausführungsform der erfindungsgemäßen mit einer Flotationsvorrichtung;
- Fig. 2:: drei schematische Querschnitte durch die Flotationsvorrichtung gemäß Figur 1 entlang der Linien A-A, B-B und C-C;
- Fig. 3:: einen schematischen Axialschnitt durch eine zweite Ausführungsform der erfindungsgemäßen mit einer Flotationsvorrichtung;

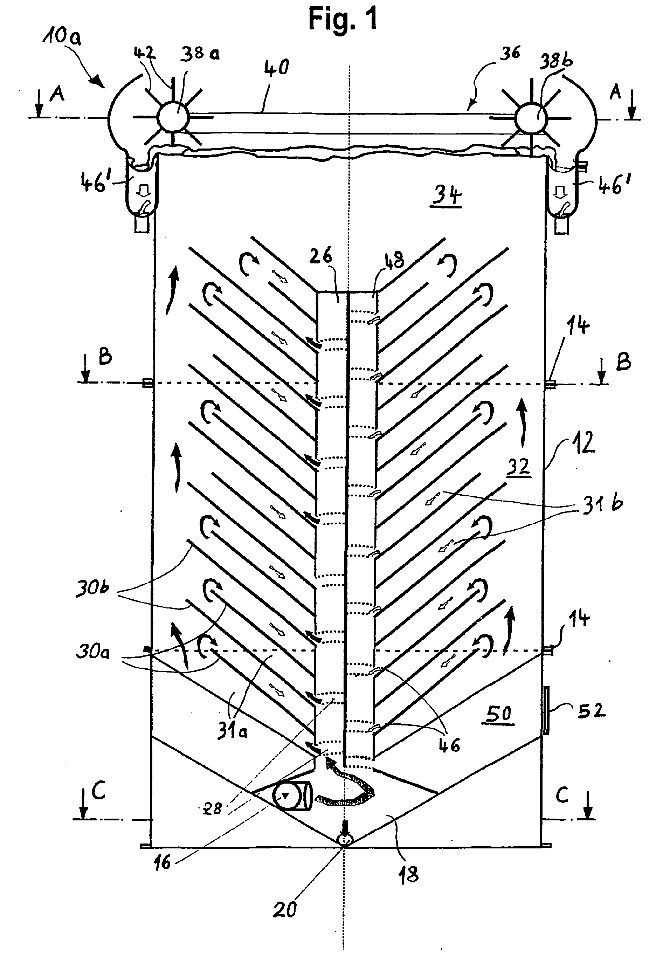

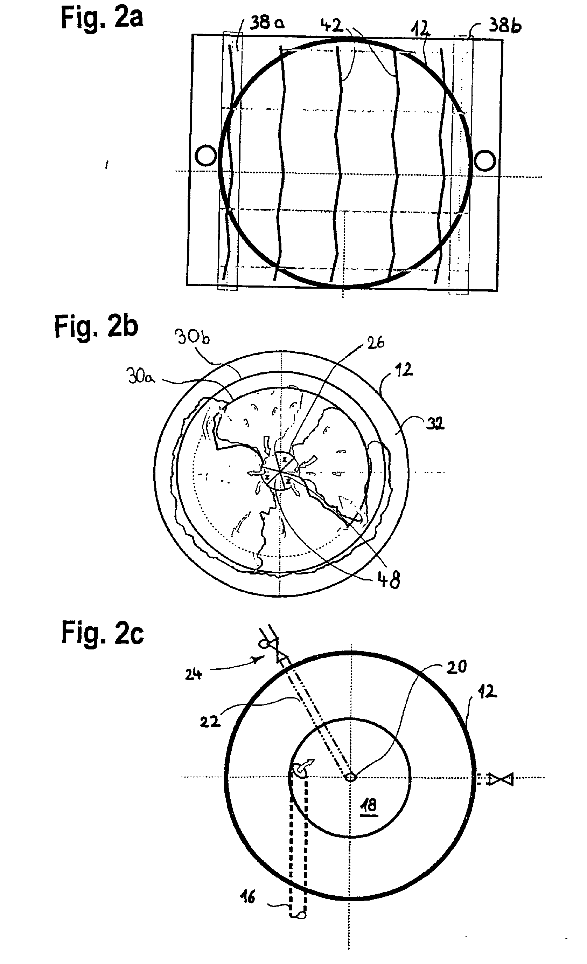

In Figur 1 ist im schematischen Axialschnitt eine erste Ausführungsform der Erfindung dargestellt, mithin eine Flotationsvorrichtung **10a**. In den Figuren 2a, 2b und 2c sind drei Querschnitte durch die Flotationsvorrichtung **10a** entlang der Linien A-A (Fig. 2a); B-B (Fig. 2b) und C-C (Fig. 2c) dargestellt.

Unter Bezugnahme auf die Figuren 1 und 2 besteht die Flotationsvorrichtung **10a** im wesentlichen aus einem runden Flotationstank **12**, an dessen Unterende der Suspensionseinlauf sowie der Klarfluid-Auslaß und an dessen Oberende der Ablauf für das Flotat vorgesehen ist. Wie durch die Flansche **14** angedeutet, kann der Flotationstank aus mehreren Segmenten aufgebaut sein.

Im einzelnen ist im unteren Bereich der Flotationsvorrichtung **10a** ein Suspensionszulauf **16** vorgesehen, der in einen doppelkonischen Reaktions- und Mischraum **18** exzentrisch einmündet. Im kegelförmigen Bodenbereich des Reaktions- und Mischraums **18** ist ein Sedimentauslaß **20** vorgesehen, der mit einer Sedimentleitung **22** verbunden ist, die mit einem zeitgetakteten Sedimentventil **24** verschlossen ist.

Der obere Konus des Reaktions- und Mischraums **18** mündet in mindestens ein vertikal etwa mittig im Flotationstank **12** angeordnetes Suspensionsverteilrohr **26**, das eine Vielzahl von vorzugsweise schlitzartigen Suspensionsauslässen **28** in das Innere des Flotationstanks **12** aufweist.

Im Flotationstank **12** und das mindestens eine Suspensionsverteilrohr **26** ringförmig umschließend sind eine Vielzahl konisch sich nach oben erweiternde ringförmige Lamellen angeordnet, wovon jede zweite Lamelle **30a** in Radialrichtung kürzer und jede andere Lamelle **30b** länger ausgeführt ist. Die Suspensionsauslässe **28** münden in erste Lamellenringräume **31a**, die jeweils unten von einer langen Lamelle **30b** und oben von einer kurzen Lamelle **30a** begrenzt werden. Alternierend mit den ersten Lamellenringräumen **31a** sind zweite Lamellenring-räume **31b** ausgebildet, die jeweils unten von einer kurzen Lamelle **30a** und oben von einer langen Lamelle **30b** begrenzt werden.

Radial außerhalb der langen Lamellen **30b** erstreckt sich bis zur Wandung des Flotationstankes **12** ein ringförmiger Trennraum **32**, der mit einem im oberen Bereich des Flotationstankes **12** vorgesehenen Flotatsammelraum **34** kommuniziert. Dort ist am Flotationstank **12** eine Räumpaddelvorrichtung **36** montiert, die mehrere über zwei Walzenanordnungen **38a, 38b** und Endlosbänder **40** umlaufende Räumpaddel **42** umfassen, welche in den Flotatsammelraum **34** eintauchen und zu einer umlaufenden Flotatabführrinne **461** führen.

Die zweiten Lamellenringräume **31b** weisen innenendig vorzugsweise schlitzartige Klarfluidauslässe **46** auf, über die eine Verbindung zu mindestens einem Klarfluid-Sammelrohr **48** gebildet wird. Das mindestens eine Klarfluid-Sammelrohr **48** mündet wiederum in einen Klarfluid-Reservoir **50**, der mit einer Klarfluid-Ableitöffnung **52** kommuniziert, welche mit einem nicht gezeigten Regelventil versehen ist, um das Flüssigkeitsniveau im Flotationstank **12** einzustellen.

Wie sich aus Fig. 2b ergibt, sind mehrere Suspensionsverteilrohre **26** und mehrere Klarfluid-Sammelrohre **48** zu einem Zellrohr zusammengefaßt, das aus mehreren im Querschnitt kreissektorartig geformten parallelen Rohren besteht, wobei jedes zweite Sektorrohr ein Suspensionsverteilrohr **26** und jedes anderes Sektorrohr ein Klarfluid-Sammelrohr **48** bildet. Das Zellrohr ist in der dargestellten Ausführung im Querschnitt kreisrund. Es kann alternativ auch vieleckig, insbesondere quadratisch ausgebildet sind,und insbesondere auch vier im Quadrat nebeneinander angeordneten wiederum quadratischen Rohren bestehen, von denen je zwei gegenüberliegende Rohre Suspensionsverteilrohre **26** und die anderen Rohre Klarfluid-Sammelrohre **48** sind.

Die Lamellen **30** sind in Figur 2b mit kreisrundem Querschnitt dargestellt. Andere Formen wie Vielecke, insbesondere ein Quadrat, können ebenfalls zur Anwendung kommen. Die kürzeren Lamellen **30a** sind ca. 5% bis 40%, vorzugsweise 10% bis 20%, kürzer als die längeren Lamellen **26b**.

Der Trennraum **26** hat vorzugsweise eine Breite, die zwischen 10% und 30% der Länge der längeren Lamellen **30b** entspricht.

Im Betrieb wird eine Suspension, vorzugsweise aus Wasser, die auch Schwerteile enthalten kann, über den Suspensionszulauf 16 exzentrisch tangential in den Reaktions- und Mischraum **18** eingeleitet. Die Suspension kann entweder vor dem Eintritt in den Reaktions- und Mischraum **18** oder kurz danach mit Gasblasen versetzt werden und/oder es können chemische oder physikalische Flockungshilfsmittel zugesetzt werden. Durch die tangentiale Einströmung der Suspension in den Reaktions- und Mischraum **18** erfolgt eine wirksame Abscheidung der Schwerteile, die nach unten sinken und über den Sedimentauslaß **20** abgeführt werden.

Aus dem Reaktions- und Mischraum **18** strömt die mit Flockungsmitteln und/oder Gasblasen versetzte Suspension in das oberhalb angeordnete Suspensionsverteilrohr **26**, und von dort über die Suspensionsauslässe **28** in die ersten Lamellenringräume **31a**. Die Suspension strömt anschließend unter stetiger Verlangsamung radial nach außen und oben und gelangt in den Trennraum **32**. Dabei erfolgt zunehmend eine Auftrennung der Suspension in Klarfluid und die abzutrennenden Stoffe, also Feststoffe, gelöste und teilgelöste Stoffe. Während die abzutrennenden Stoffe im Trennraum nach oben zum Flotatsammelraum **34** hin strömen, strömt die Masse des Klarfluides in die zweiten Lamellenringräume **31b**, die alternierend zu den ersten Lamellenringräumen **31a** angeordnet sind. Durch die Lamellenringräume **31b** strömt das Klarfluid schräg nach unten und innen, wobei eine weitere Abtrennung der Feststoffe, gelösten und teilgelösten Stoffe erfolgt, die nach oben und außen zum Trennraum **32** zurückströmen. Das Klarfluid strömt über die schlitzartigen Klarfluidauslässe **46** in das Klarfluid-Sammelrohr **48** und von dort zur Klarfluid-Ableitung **50**, von wo es über die mit einem Regelventil versehene Klarfluid-Ableitöffnung **52** aus der Flotationsvorrichtung **10a** geregelt abgeleitet wird.

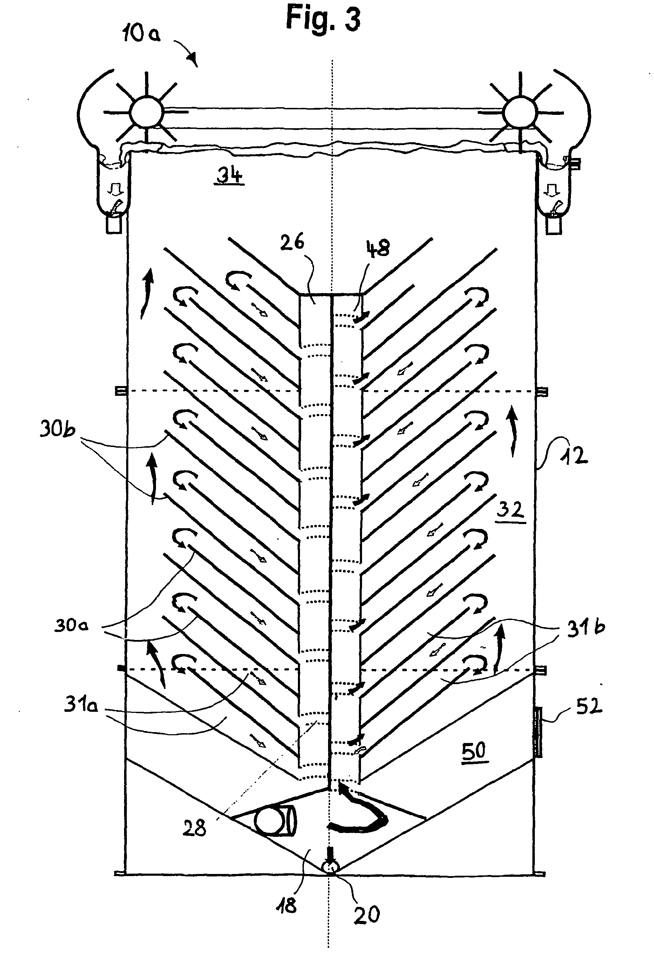

In Fig. 3 ist eine zweite Ausführungsform der Erfindung dargestellt, in der gleiche Bezugszeichen die gleichen Bauteile wie in den Figuren 1 und 2 bezeichnen. Diese zweite Ausfü h-rungsform der Erfindung unterscheidet sich von der ersten lediglich dadurch, daß die Einströmung der Suspension aus dem Suspensionsverteilrohr **26** über die Suspensionsauslässe **28** in zweite Lamellenringräume **31b** erfolgt, die jeweils unten von einer kurzen Lamelle **30a** und oben von einer langen Lamelle **30b** begrenzt werden. Dementsprechend erfolgt die Strömung des Klarfluides aus dem Trennraum **32** in die ersten Lamellenringräume **31a**, die jeweils unten von einer langen Lamelle **30b** und oben von einer kurzen Lamelle **30a** begrenzt werden.

Durch diesen Unterschied erfolgt die Hauptströmung des Kla r-fluides nach unten und somit entgegen dem Hauptstrom der Feststoffe, gelösten und teilgelösten Stoffe, die nach oben zum Flotatsammelraum **34** hin erfolgt. Durch diesen Gegenstrom und die damit erzeugten Verwirbelungen ergibt sich für spezielle Suspensionszusammensetzungen ein besserer Trennungsgrad als mit der Ausführung gemäß den Figuren 1 und 2.

Die Erfindung ist vorzugsweise bei der Wasseraufbereitung in Papierfabriken oder Abwasserklärung einsetzbar. Die Suspension enthält beispielsweise als Feststoffe: Fasern, Mineralpartikel oder Mikroorganismen, als teilgelöste Stoffe Kolloidalstoffe, Fette, Farbpigmente und als gelöste Stoffe Kohle - hydrate, Salze, organische oder anorganische Säuren.

## Patentansprüche

1. Flotationsvorrichtung zur Trennung von Stoffen oder Stoffgemischen aus Suspensionen zur Bildung mindestens einer stoffreichen und einer stoffarmen Fraktion, mit mehreren in einem Flotationstank übereinander angeordneten, rotationssymmetrischen Lamellen, wobei die stoffarme Fraktion beim Trennvorgang in Lamellenzwischenräume zwischen den Lamellen eintritt und zu einem Klarfluid-Sammelrohr gelangt, wobei horizontal außerhalb der Lamellen ein vertikal sich erstreckender ringförmiger Trennraum ausgebildet ist, der mit einem oberhalb der Lamellen vorgesehenen Ablauf für die stoffreiche Fraktion kommuniziert, **gekennzeichnet durch**
einen Reaktions- und Mischraum (18) mit exzentrischem Zulauf (16) für die Mischung der Suspensionsteilchen mit Gasblasen und zur Weiterleitung in mindestens ein zentral angeordnetes vertikales Suspensions-Verteilrohr (26);
wobei das Suspensions-Verteilrohr (26) und das Klarfluid-Sammelrohr (48) nebeneinander angeordnet sind;
die Lamellen (30) das Suspensions-Verteilrohr (26) sowie das Klarfluid-Sammelrohr (48) ringförmig umschließen;
jeder zweite Lamellenringraum (31) zwischen benachbarten Lamellen (30) mit dem Suspensions-Verteilrohr (26) und jeder andere Lamellenzwischenraum (31) mit dem Klarfluid-Sammelrohr (48) verbunden ist, so daß die Strömung aus einem Lamellenzwischenraum (31) von innen nach außen zum Trennraum (32) hin und anschließend in einen benachbarten Lamellenzwischenraum (31) von außen nach innen erfolgt.

2. Flotationsvorrichtung nach Anspruch 1, **dadurch gekennzeichnet, daß** die Lamellen (30) und/oder der Flotationstank (12) rund oder regelmäßig vieleckig ausgebildet sind.

3. Flotationsvorrichtung nach Anspruch 2, **dadurch gekennzeichnet, daß** die Lamellen (30) im wesentlichen konisch oder umgekehrt pyramidenförmig ausgebildet sind.

4. Flotationsvorrichtung nach Anspruch 3, **dadurch gekennzeichnet, daß** die Lamellen (30) in Radialrichtung nach schräg oben verlaufen.

5. Flotationsvorrichtung nach Anspruch 1, **dadurch gekennzeichnet, daß** abwechselnd in Radialrichtung kürzere Lamellen (30a) und längere Lamellen (30b) übereinander angeordnet sind.

6. Flotationsvorrichtung nach Anspruch 5, **dadurch gekennzeichnet, daß** ein unten durch eine längere Lamelle (30b) und oben durch eine kürzere Lamelle (30a) gebildeter erster Lamellenringraum (31a) mit dem Suspensions-Verteilrohr (26) und ein unten durch eine kürzere Lamelle (30a) und oben durch eine längere Lamelle (30b) gebildeter zweiter Lamellenringraum (31a) mit dem Klarfluid-Sammelrohr (48) verbunden ist.

7. Flotationsvorrichtung nach Anspruch 5, **dadurch gekennzeichnet, daß** ein unten durch eine kürzere Lamelle (30a) und oben durch eine längere Lamelle (30b) gebildeter zweiter Lamellenringraum (31b) mit dem Suspensions-Verteilrohr (26) und ein unten durch eine längere Lamelle (30b) und oben durch eine kürzere Lamelle (30a) gebildeter erster Lamellenringraum (31a) mit dem Klarfluid-Sammelrohr (48) verbunden ist.

8. Flotationsvorrichtung nach Anspruch 5, **dadurch gekennzeichnet, daß** die kürzeren Lamellen (30a) in Radialrichtung um 5% bis 40% kürzer sind als die längeren Lamellen (30b).

9. Flotationsvorrichtung nach Anspruch 5, **dadurch gekennzeichnet, daß** der Trennraum (32) zwischen den Enden der Lamellen (30) und der Wandung des Flotationstanks (12) eine Erstreckung in Radialrichtung zwischen 10% und 30% der Erstreckung der längeren Lamellen (30b) hat.

10. Flotationsvorrichtung nach Anspruch 1, **dadurch gekennzeichnet, daß** die Neigung der Lamellen (30) zur Horizontalen zwischen 10° und 60°, vorzugsweise zwischen 30° und 50° beträgt.

11. Flotationsvorrichtung nach Anspruch 1, **dadurch gekennzeichnet, daß** zentrisch im Flotationstank (12) ein Leitungsrohr angeordnet ist, das sowohl das mindestens eine Suspensions-Verteilrohr (26) als auch das mindestens eine Klarfluid-Sammelrohr (48) umfaßt.

12. Flotationsvorrichtung nach Anspruch 11, **dadurch gekennzeichnet, daß** das Leitungsrohr in mindestens zwei Sektorenleitungen aufgeteilt ist, dessen eine Sektorenleitung das Suspensions-Verteilrohr (26) und dessen zweite Sektorenleitung das Klarfluid-Sammelrohr (48) bildet.

13. Flotationsvorrichtung nach Anspruch 12, **dadurch gekennzeichnet, daß** das Leitungsrohr in 4 bis 8, vorzugsweise 6 Sektorenleitungen aufgeteilt ist, wobei sich in Umfangsrichtung die Suspensions-Verteilrohre (26) und Klarfluid-Sammelrohre (48) abwechseln.

14. Flotationsvorrichtung nach Anspruch 11, **dadurch gekennzeichnet, daß** im Leitungsrohr horizontale Durchtrittsschlitze (28, 46) etwa der Sektorenbreite ausgebildet sind für den Austritt der Suspension aus dem Suspensions-Verteilrohr (26) sowie den Eintritt des Klarfluides in das Klarfluid-Sammelrohr (48), jeweils in die bzw. aus den zugehörigen Lamellenringräumen (31).

15. Flotationsvorrichtung nach Anspruch 1, **dadurch gekennzeichnet, daß** der Reaktions- und Mischraum (18) doppelkonisch ausgebildet ist, wobei der obere Konus in das mindestens eine Suspensions-Verteilrohr (26) und der untere Konus in einen Sedimentauslaß (20) mündet.

16. Flotationsvorrichtung nach Anspruch 1, **dadurch gekennzeichnet, daß** diese eine Sockelbaugruppe, eine Deckelbaugruppe sowie mehrere vertikal übereinander zusammenfügbare Lamellenbaugruppen umfaßt, wobei jede Lamellenbaugruppe Verteil- und Sammelrohrabschnitte, Ringraumaußenwandabschnitte sowie mehrere Lamellen (30) umfaßt.

## Claims

1. A flotation device for separating materials or mixtures of materials from suspensions to form at least one high material content fraction and one low material content fraction, with several rotationally symmetrical plates arranged one above another in a flotation tank, wherein during the separating procedure, the low material content fraction enters into plate spaces between the plates and arrives at a clarified fluid collecting tube, wherein horizontally outside the plates, a vertically extending annular separating space is formed that communicates with a run-off for the high material content provided above the plates, **characterised by**
a reaction and mixing space (18) with eccentric inlet (16) for mixing the suspension particles with gas bubbles and for further conveyance into at least one centrally arranged vertical suspension distribution tube (26);
wherein the suspension distribution tube (26) and the clarified fluid collecting tube (48) are arranged adjacently;
the plates (30) surround the suspension distribution tube (26) and the clarified fluid collecting tube (48) in an annular manner;
every second annular plate space (31) between adjacent plates (30) is connected to the suspension distribution tube (26) and every other space between plates (31) is connected to the clarified fluid collecting tube (48), so the flow takes place from one space between plates (31) from the inside to the outside towards the separating space (32) and subsequently into an adjacent space between plates (31) from the outside to the inside.

2. The flotation device as set forth in claim 1, **characterised in that** the plates (30) and/or the flotation tank (12) are configured round or regularly polygonal.

3. The flotation device as set forth in claim 2, **characterised in that** the plates (30) are configured substantially conically or, conversely, pyramid-shaped.

4. The flotation device as set forth in claim 3, **characterised in that** the plates (30) are inclined upwards in the radial direction.

5. The flotation device as set forth in claim 1, **characterised in that** in the radial direction, shorter plates (30a) and longer plates (30b) are arranged alternately one above another.

6. The flotation device as set forth in claim 5, **characterised in that** a first annular plate spacing (31a) formed below by a longer plate (30b) and above by a shorter plate (30a) is connected to the suspension distribution tube (26) and a second annular plate spacing (31a) formed below by a shorter plate (30a) and above by a longer plate (30b) is connected to the clarified fluid collecting tube (48).

7. The flotation device as set forth in claim 5, **characterised in that** a second annular plate spacing (31b) formed below by a shorter plate (30a) and above by a longer plate (30b) is connected to the suspension distribution tube (26) and a first annular plate spacing (31a) formed below by a longer plate (30b) and above by a shorter plate (30a) is connected to the clarified fluid collecting tube (48).

8. The flotation device as set forth in claim 5, **characterised in that** the shorter plates (30a) are 5% to 40% shorter in the radial direction than the longer plates (30b).

9. The flotation device as set forth in claim 5, **characterised in that** the separating space (32) between the ends of the plates (30) and the wall of the flotation tank (12) has an extent between 10% and 30% of the extent of the longer plates (30b) in the radial direction.

10. The flotation device as set forth in claim 1, **characterised in that** the inclination of the plates with respect to the horizontal is between 10° and 60°, preferably between 30° and 50°.

11. The flotation device as set forth in claim 1, **characterised in that** arranged centrally in the flotation tank (12) is a conduit comprising both the at least one suspension distribution tube (26) and the at least one clarified fluid collecting tube (48).

12. The flotation device as set forth in claim 11, **characterised in that** the conduit is divided into at least two sector-shaped conduits, one of which sector-shaped conduits forms the suspension distribution tube (26) and the second sector-shaped conduit of which forms the clarified fluid collecting tube (48).

13. The flotation device as set forth in claim 12, **characterised in that** the conduit is divided into 4 to 8, preferably 6 sector-shaped conduits, wherein the suspension distribution tubes (26) and clarified fluid collecting tubes (48) alternate circumferentially.

14. The flotation device as set forth in claim 11, **characterised in that** in the conduit, horizontal throughflow slots (28, 46) are configured approximately the width of the sectors for discharge of the suspension from the suspension distribution tube (26), and for letting in the clarified fluid into the clarified fluid tube (48) into and respectively out of the associated annular plate spaces (31).

15. The flotation device as set forth in claim 1, **characterised in that** the reaction and mixing space (18) is configured as a double cone, wherein the upper cone merges into the at least one suspension distribution tube (26) and the lower cone into a sediment drain (20).

16. The flotation device as set forth in claim 1, **characterised in that** it includes a base unit, a lid unit and several plate units that can be assembled vertically one above another, wherein each plate unit includes distribution and collecting tube sections, annular space external wall sections, and several plates (30).

## Revendications

1. Dispositif de flottation destiné à séparer dans des suspensions des matières ou des mélanges de matières, pour former au moins une fraction riche en matières et une fraction pauvre en matières, lequel dispositif présente plusieurs lamelles à symétrie de rotation disposées les unes au-dessus des autres dans une cuve de flottation, la fraction pauvre en matières pénétrant lors de l'opération de séparation dans les espaces intermédiaires entre les lamelles et se rendant dans un tube de collecte de fluide clarifié, une chambre de séparation de forme annulaire qui s'étend à la verticale et à l'extérieur des lamelles dans le sens horizontal étant prévue et communiquant avec un débordement de la fraction riche en matières prévu au-dessus des lamelles, **caractérisé par**
une chambre (18) de réaction et de mélange dotée d'une amenée excentrique (16) du mélange de particules en suspension et de bulles de gaz et pour l'envoyer dans au moins un tube (26) de répartition de suspension disposé verticalement au centre,
le tube (26) de répartition de suspension et le tube (48) de collecte de fluide clarifié étant disposés l'un à côté de l'autre,
les lamelles (30) entourant en anneau le tube (26) de répartition de suspension ainsi que le tube (48) de collecte de fluide clarifié,
chaque deuxième chambre annulaire (31) à lamelles située entre des lamelles (30) voisines étant reliée au tube (26) de répartition de suspension et chaque autre espace intermédiaire (31) entre lamelles étant relié au tube (48) de collecte de fluide clarifié, de telle sorte que l'écoulement depuis un espace intermédiaire (31) entre lamelles a lieu de l'intérieur vers l'extérieur en direction de la chambre de séparation (32) et ensuite de l'extérieur vers l'intérieur dans un espace intermédiaire (31) entre lamelles voisin.

2. Dispositif de flottation selon la revendication 1, **caractérisé en ce que** les lamelles (30) et/ou la cuve de flottation (12) ont la forme d'un cercle ou d'un polygone régulier.

3. Dispositif de flottation selon la revendication 2, **caractérisé en ce que** les lamelles (30) sont essentiellement coniques ou inversement pyramidales.

4. Dispositif de flottation selon la revendication 3, **caractérisé en ce que** les lamelles (30) s'étendent obliquement vers le haut dans la direction radiale.

5. Dispositif de flottation selon la revendication 1, **caractérisé en ce que** des lamelles (30a) courtes dans la direction radiale et des lamelles (30b) longues dans la direction radiale sont disposées en alternance les unes au-dessus des autres.

6. Dispositif de flottation selon la revendication 5, **caractérisé en ce qu'**un premier espace annulaire (31a) à lamelles délimité dans le bas par une longue lamelle (30b) et dans le haut par une courte lamelle (30a) est relié au tube (26) de répartition de la suspension et **en ce qu'**un deuxième espace annulaire (31a) à lamelles délimité dans le bas par une courte lamelle (30a) et dans le haut par une longue lamelle (30b) est relié au tube (48) de collecte du fluide clarifié.

7. Dispositif de flottation selon la revendication 5, **caractérisé en ce qu'**un deuxième espace annulaire (31b) entre lamelles délimité dans le bas par une courte lamelle (30a) et dans le haut par une longue lamelle (30b) est relié au tube (26) de répartition de suspension et **en ce qu'**un premier espace annulaire (31) à lamelles délimité dans le bas par une longue lamelle (30b) et dans le haut par une courte lamelle (30a) est relié au tube (48) de collecte de fluide clarifié.

8. Dispositif de flottation selon la revendication 5, **caractérisé en ce que** dans la direction radiale, les courtes lamelles (30a) sont plus courtes de 5 % à 40 % que les longues lamelles (30b).

9. Dispositif de flottation selon la revendication 5, **caractérisé en ce que** la chambre de séparation (32) présente entre les extrémités des lamelles (30) et la paroi de la cuve de flottation (12) une extension dans la direction radiale qui correspond à entre 10 % et 30 % de l'extension des longues lamelles (30b).

10. Dispositif de flottation selon la revendication 1, **caractérisé en ce que** la pente des lamelles (30) par rapport à l'horizontale est comprise entre 10° et 60° et de préférence entre 0° et 50°.

11. Dispositif de flottation selon la revendication 1, **caractérisé en ce qu'**un tube qui comprend à la fois le ou les tubes (26) de répartition de suspension et le ou les tubes (48) de collecte de fluide clarifié est disposé au centre de la cuve de flottation (12).

12. Dispositif de flottation selon la revendication 11, **caractérisé en ce que** le tube est divisé en au moins deux conduits sectoriels dont l'un forme le tube (26) de répartition de suspension et le deuxième le tube (48) de collecte de fluide clarifié.

13. Dispositif de flottation selon la revendication 12, **caractérisé en ce que** le tube est divisé en 4 à 8 et de préférence en 6 conduits sectoriels, les tubes (26) de répartition de suspension et les tubes (48) de collecte de fluide clarifié alternant dans le sens de la périphérie.

14. Dispositif de flottation selon la revendication 11, **caractérisé en ce que** des fentes horizontales de passage (28, 46) qui présentent sensiblement la largeur d'un secteur sont formées dans le tube pour permettre à la suspension de sortir du tube (26) de répartition de suspension ainsi qu'au fluide clarifié de pénétrer dans le tube (48) de collecte de fluide clarifié, respectivement dans ou hors des chambres annulaires (31) à lamelles correspondantes.

15. Dispositif de flottation selon la revendication 1, **caractérisé en ce que** la chambre (18) de réaction et de mélange est configurée en double cône, le cône supérieur débouchant dans le ou les tubes (26) de répartition de suspension et le cône inférieur dans une évacuation (20) des sédiments.

16. Dispositif de flottation selon la revendication 1, **caractérisé en ce qu'**il comprend un module de socle, un module de couvercle ainsi que plusieurs modules à lamelles qui peuvent être assemblés verticalement les uns au-dessus des autres, chaque module à lamelles comportant des tronçons de tube de répartition et de tube de collecte, des tronçons de paroi extérieure des chambres annulaires ainsi que plusieurs lamelles (30).
